(19) Europäisches Patentamt
European Patent Office
Office européen des brevets

(11) EP 2 578 649 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**27.02.2019 Patentblatt 2019/09**

(45) Hinweis auf die Patenterteilung:
**30.03.2016 Patentblatt 2016/13**

(21) Anmeldenummer: **12187019.0**

(22) Anmeldetag: **02.10.2012**

(51) Int Cl.:
***C09D 183/06*** *(2006.01)* ***C08G 77/14*** *(2006.01)*

(54) **ZUSAMMENSETZUNG FÜR DIE HERSTELLUNG EINER BESCHICHTUNG MIT HOHER HAFT- UND KRATZFESTIGKEIT**

Composition for the production of a coating comprising high adhesion and scratch resistance

Composition de préparation d’un revêtement comprenant une adhésion et une résistance à la rayure élevées

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2011 DE 102011083960**
**04.10.2011 US 201161543018 P**

(43) Veröffentlichungstag der Anmeldung:
**10.04.2013 Patentblatt 2013/15**

(73) Patentinhaber: **Carl Zeiss Vision International GmbH**
**73430 Aalen (DE)**

(72) Erfinder:
- **Hugenberg, Norbert**
  **73434 Aalen (DE)**
- **Peng, Bin**
  **73434 Aalen (DE)**
- **Pütz, Jörg**
  **73431 Aalen (DE)**

(74) Vertreter: **Haggenmüller, Christian**
**Maiwald Patentanwalts- und Rechtsanwaltsgesellschaft mbH**
**Elisenhof**
**Elisenstraße 3**
**80335 München (DE)**

(56) Entgegenhaltungen:
**EP-A1- 2 385 086**
**EP-A2- 1 902 831**
**DE-A1- 19 857 317**
**DE-T2- 69 531 661**
**US-A- 5 116 644**

EP 2 578 649 B2

## Beschreibung

Im Bereich der Optik und Optoelektronik werden zunehmend transparente Polymere verwendet, da diese Materialien hinsichtlich Bruchsicherheit und Gewichtsersparnis Vorteile bieten. Auch lassen sich im Bereich der Präzisionsoptik Bauteile mit komplexerer dreidimensionaler Geometrie wie Objektive oder Linsen relativ einfach in großer Stückzahl herstellen.

Beispielhafte Kunststoffmaterialien, die derzeit im Bereich der Optik Anwendung finden, sind Polymethylmethacrylat, Polycarbonat, Diethylenglycolbisallylcarbonat (Handelsname CR39®) oder auch spezielle hochbrechende Polymere auf Polythiourethanbasis.

Ein Nachteil dieser Kunststoffmaterialien ist deren relativ geringe Oberflächenhärte und Kratzfestigkeit.

Ein bekannter Ansatz zur Verbesserung der Kratzfestigkeit besteht in dem Aufbringen einer Oberflächenbeschichtung über einen Sol-Gel-Prozess. Dabei werden z.B. Tetraalkoxysilane eingesetzt, die unter geeigneten Bedingungen hydrolysieren und anschließend durch Kondensation der durch die Hydrolyse entstandenen Silanolgruppen zu einer dreidimensional vernetzten Silikatstruktur führen.

Wie oben erläutert, werden inzwischen eine Reihe unterschiedlicher Kunststoffe als Substrate im Bereich der optischen Materialien eingesetzt. Aufgrund ihrer jeweiligen chemischen Struktur unterscheiden sich diese Kunststoffsubstrate gegebenenfalls deutlich in ihren Oberflächeneigenschaften, was wiederum einen signifikanten Einfluss auf die Haftfestigkeit einer Beschichtungszusammensetzung auf der Substratoberfläche haben kann.

Wünschenswert wäre eine Beschichtungszusammensetzung, die auf unterschiedlichen Kunststoffsubstratoberflächen eine gute Haftfestigkeit aufweist und zudem eine möglichst hohe Kratzfestigkeit aufweist.

Zusätzlich zu den oben genannten Eigenschaften sollte die Beschichtungszusammensetzung idealerweise einer Reihe weiterer Anforderungen genügen. Die Beschichtung sollte unter anderem eine möglichst geringe Neigung zur Rissbildung unter thermischer Beanspruchung sowie eine möglichst hohe Beständigkeit gegenüber Laugen und/oder Säuren aufweisen.

Bei der Verwirklichung dieses Anforderungsprofils ist allerdings zu berücksichtigen, dass sich die oben genannten Eigenschaften häufig gegenläufig verhalten und die Verbesserung einer dieser Eigenschaften daher nur auf Kosten einer anderen Eigenschaft erzielt werden kann.

Um die Flexibilität des Silikatnetzwerkes zu erhöhen und dadurch die Neigung zur Rissbildung bei thermischer Beanspruchung zu verringern, ist es beispielsweise üblich, die Tetraalkoxysilane in Kombination mit Organoalkoxysilanen (d.h. Silane, die außer Alkoxygruppen auch einen oder mehrere direkt an Si-Atom gebundene organische Reste aufweisen) einzusetzen. Die dadurch erhaltene organischanorganische Netzwerkstruktur weist zwar eine höhere Flexibilität und Basenstabilität auf, allerdings auf Kosten einer gegenüber dem rein anorganischen Silikatnetzwerk geringen Härte.

US 3,986,997 beschreibt eine wässrige Zusammensetzung, die kolloidales $SiO_2$ sowie ein Organotrialkoxysilan wie z.B. Methyltrimethoxysilan und/oder Hydrolyse- und/oder Kondensationsprodukte dieses Organotrialkoxysilans enthält.

Weiterhin ist es aus dem Stand der Technik auch bekannt, Tetraalkoxysilan bzw. kolloidales $SiO_2$ sowie ein Organoalkoxysilan, dessen organischer Rest eine Epoxidgruppe enthält, zusammen mit einer Dicarbonsäure oder einem Dicarbonsäureanhydrid einzusetzen.

So offenbart US 2001/0049023 A1 eine Zusammensetzung für die Beschichtung eines Substrats auf der Basis eines wässrig-organischen Lösungsmittelgemisches, das (i) ein Organoalkoxysilan mit Epoxidfunktionalität oder dessen Hydrolyse- und/oder Kondensationsprodukte, (ii) ein Tetraalkoxysilan oder dessen Hydrolyse- und/oder Kondensationsprodukte und (iii) eine Dicarbonsäure oder ein Dicarbonsäureanhydrid enthält.

Die Verwendung von Tetraalkoxysilan bzw. kolloidalem $SiO_2$ sowie einem Organoalkoxysilan, dessen organischer Rest eine Epoxidgruppe enthält, in Kombination mit einer Dicarbonsäure oder einem Dicarbonsäureanhydrid wird auch in der US 4,355,135 und der US 5,322,888 diskutiert.

WO 2008/087741 offenbart eine Beschichtungszusammensetzung, die (A) eine Poly(methyl)glycidyletherverbindung mit einem aliphatischen Rest R1, (B) ein Silsesquioxan, (C) eine Alkoxyverbindung, (D) eine Organoalkoxyverbindung, wobei der an das Si-Atom gebundene organische Rest eine kationisch polymerisierbare Gruppe wie z.B. eine Epoxidgruppe aufweist, und (E) einen Photopolymerisationskatalysator enthält. Die in der WO 2008/087741 beschriebenen Zusammensetzung sind frei von Lösungsmitteln.

Die EP 2 385 086 A1 betrifft eine Zusammensetzung für die Herstellung einer kratzfesten Beschichtung mit verbesserter Laugenbeständigkeit.

Die DE 198 57 317 A1 ist auf Haushaltsgeräte ausgerichtet, die auf einer mit einem Pulverlack beschichteten Oberfläche eine kratz- und abriebbeständige Deckschicht aus einem Lack aufweisen.

In der DE 695 31 661 T2 werden eine filmbildende Beschichtungslösung sowie eine Kunststofflinse beschrieben.

Unter Berücksichtigung der obigen Ausführungen besteht eine Aufgabe der vorliegenden Erfindung darin, eine Zusammensetzung bereit zu stellen, aus der sich eine Beschichtung herstellen lässt, die eine gute Haftung auf unterschiedlichen Substraten aufweist und zudem eine möglichst hohe Kratzbeständigkeit bei gleichzeitig geringer Neigung

zur Rissbildung unter thermischer Beanspruchung sowie hoher Beständigkeit gegenüber Laugen und/oder Säuren aufweist.

Gelöst wird diese Aufgabe durch die Bereitstellung einer Zusammensetzung für die Herstellung einer Beschichtung, umfassend

(a) ein Silanderivat der Formel (I)

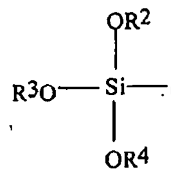

(I)

worin

$R^1$, $R^2$, $R^3$ und $R^4$, die gleich oder unterschiedlich sein können, ausgewählt werden aus Alkyl, Acyl, Alkylenacyl, Cycloalkyl, Aryl oder Alkylenaryl, die gegebenenfalls substituiert sein können,
und/oder ein Hydrolyse- und/oder Kondensationsprodukt des Silanderivats der Formel (I),

(b) ein Silanderivat der Formel (II)

$$R^6R^7_{3-n}Si(OR^5)_n \qquad (II)$$

worin

$R^5$ eine unsubstituierte oder substituierte Alkyl-, Acyl-, Alkylenacyl-, Cycloalkyl-, Aryl- oder Alkylenarylgruppe ist,

$R^6$ ein organischer Rest ist, der eine Epoxidgruppe enthält,

$R^7$ eine unsubstituierte oder substituierte Alkyl-, Cycloalkyl-, Aryl- oder Alkylenarylgruppe ist,

n 2 oder 3 ist,

und/oder ein Hydrolyse- und/oder Kondensationsprodukt des Silanderivats der Formel (II),

(c) ein kolloidales anorganisches Oxid, Fluorid oder Oxyfluorid,

(d) eine Epoxidverbindung, die drei Epoxidgruppen aufweist,

(e) ein Katalysatorsystem, umfassend

- eine Lewis-Säure und
- ein thermolatentes Lewis-Säure-Base-Addukt,

wobei die Epoxidverbindung eine Triglycidyletherverbindung ist,
und die Triglycidyletherverbindung die nachfolgende Formel (V) aufweist:

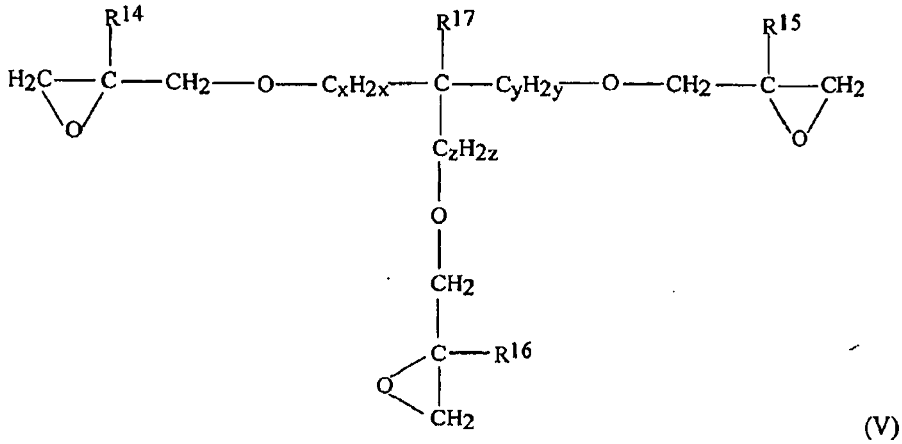

(V)

worin

$R^{14}$, $R^{15}$ und $R^{16}$, die gleich oder unterschiedlich sein können, Wasserstoff oder Methyl sind,

$R^{17}$ Wasserstoff oder $C_{1-4}$-Alkyl ist,

x = 0-3 ist,

y = 0-3 ist,

z = 0-3 ist, und wobei folgende Zusammensetzung ausgeschlossen ist:
36 Teile Trimethylolpropantriglycidylether, 162 Teile 2-Propanol, 264 Teile 1-Methoxy-2-propanol, 186 Teile 3-Glycidoxypropyltrimethoxysilan, 150 Teile Tetraethoxysilan, 240 Teile eines $SiO_2$-Nano-Sols, 126 Teile Wasser, 7,2 Teile Aluminiumacetylacetonat, 25,2 Teile 1M Ammoniumperchlorat-Lösung, und 3,6 Teile eines Fließmittels, wobei die Anteile der jeweiligen Komponenten Gewichtsteile sind.

Wie nachfolgend noch eingehender erörtert werden wird, ermöglicht die Verwendung einer Zusammensetzung, die die Komponenten (a) bis (e) enthält, die Herstellung einer Beschichtung, die eine sehr gute Haftfestigkeit auf unterschiedlichen Kunststoffsubstraten aufweist und sich außerdem durch eine hohe Kratzfestigkeit sowie eine hohe Laugenbeständigkeit und geringe Neigung zur Rissbildung auf dem Substrat auszeichnet.
Wie oben bereits angegeben, enthält die erfindungsgemäße Zusammensetzung als Komponente (a) ein Silanderivat der Formel (I) und/oder ein Hydrolyse- und/oder Kondensationsprodukt des Silanderivats der Formel (I).
Durch den Begriff "Hydrolyse- und/oder Kondensationsprodukt des Silanderivats der Formel (I)" wird zum Ausdruck gebracht, dass es im Rahmen der vorliegenden Erfindung auch möglich ist, dass das Silanderivat (I) zumindest teilweise unter Ausbildung von Silanolgruppen bereits hydrolysiert wurde und außerdem durch Kondensationsreaktion dieser Silanolgruppen bereits eine gewisse Vernetzung stattgefunden hat.
Wenn $R^1$, $R^2$, $R^3$ und/oder $R^4$ eine Alkylgruppe ist/sind, handelt es sich bevorzugt um eine $C_{1-8}$-Alkylgruppe, bevorzugter eine $C_{1-4}$-Alkylgruppe, die gegebenenfalls noch substituiert sein kann. Beispielhaft können in diesem Zusammenhang Methyl, Ethyl, *n*-Propyl, *iso*-Propyl, *n*-Butyl, *iso*-Butyl, *tert.*-Butyl, Hexyl oder auch Octyl genannt werden.
Wenn $R^1$, $R^2$, $R^3$ und/oder $R^4$ eine Acylgruppe ist/sind, so handelt es sich bevorzugt um Acetyl, Propionyl oder Butyryl.
Wenn $R^1$, $R^2$, $R^3$ und/oder $R^4$ eine Alkylenacylgruppe ist/sind, handelt es sich bevorzugt um eine $C_{1-6}$-Alkylen-Acylgruppe (z.B. -$CH_2$-Acyl; -$CH_2$-$CH_2$-Acyl; etc.) wobei die Acyleinheit bevorzugt Acetyl, Propionyl oder Butyryl ist.
Unter einer Alkylen-Gruppe wird eine zweiwertige Alkylgruppe verstanden (also z.B. -$CH_2$-; -$CH_2$-$CH_2$-; etc.).
Wenn $R^1$, $R^2$, $R^3$ und/oder $R^4$ eine Cycloalkylgruppe ist/sind, handelt es sich bevorzugt um einen Cyclohexyl-Rest, der gegebenenfalls substituiert sein kann.
Wenn $R^1$, $R^2$, $R^3$ und/oder $R^4$ eine Arylgruppe ist/sind, handelt es sich bevorzugt um einen Phenylrest, der gegebenenfalls substituiert sein kann.
Wenn $R^1$, $R^2$, $R^3$ und/oder $R^4$ eine Alkylenarylgruppe ist/sind, handelt es sich bevorzugt um einen $C_{1-6}$-Alkylen-Arylrest (z.B. -$CH_2$-Aryl; -$CH_2$-$CH_2$-Aryl; etc.), wobei die Aryleinheit bevorzugt Phenyl ist, das gegebenenfalls substituiert sein kann.
Bevorzugte Silanderivate der Formel (I) sind z.B. Tetramethoxysilan, Tetraethoxysilan, Tetrapropoxysilan, Tetraisopropoxysilan, Tetrabutoxysilan, Tetraisobutoxysilan, Tetrakis(methoxyethoxy)silan, Tetrakis(methoxypropoxy)silan, Tetrakis(ethoxyethoxy)silan, Tetrakis(methoxyethoxyethoxy)silan, Trimethoxyethoxysilan, Dimethoxydiethoxysilan und entsprechende Derivate.

Diese Silanderivate der Formel (I) sind dem Fachmann allgemein bekannt und sind kommerziell erhältlich und/oder durch dem Fachmann bekannte Standardverfahren herstellbar.

Bevorzugt liegen die Silanderivate der Formel (I) und/oder die Hydrolyse- und/oder Kondensationsprodukte der Silanderivate der Formel (I) in der Zusammensetzung in einer Menge von 5 Gew% bis 50 Gew%, bevorzugter von 5 Gew% bis 20 Gew% vor.

Wie oben bereits angegeben, enthält die erfindungsgemäße Zusammensetzung als Komponente (b) ein Silanderivat der Formel (II) und/oder ein Hydrolyse- und/oder Kondensationsprodukt des Silanderivats der Formel (II).

Durch den Begriff "Hydrolyse- und/oder Kondensationsprodukt des Silanderivats (II)" wird wiederum zum Ausdruck gebracht, dass es im Rahmen der vorliegenden Erfindung auch möglich ist, dass das Silanderivat (II) zumindest teilweise unter Ausbildung von Silanolgruppen bereits hydrolysiert wurde und außerdem durch Kondensationsreaktion dieser Silanolgruppen bereits eine gewisse Vernetzung stattgefunden hat.

Bezüglich der bevorzugten Alkyl-, Acyl-, Alkylenacyl-, Cycloalkyl-, Aryl- oder Alkylenarylgruppen des Restes $R^5$ kann auf die oben gemachten Ausführungen für die Reste $R^1$, $R^2$, $R^3$ und $R^4$ verwiesen werden.

In einer bevorzugten Ausführungsform weist der eine Epoxidgruppe enthaltende organische Rest $R^6$ 2 bis 14 C-Atome auf.

Bevorzugt liegt die Epoxidgruppe in dem Rest $R^6$ in Form einer Glycidoxy-Gruppe vor, die bevorzugt über eine $C_{1-10}$-Alkylengruppe, bevorzugter über eine $C_{1-4}$-Alkylengruppe, z.B. Ethylen, Propylen oder Butylen, eine Arylengruppe, z.B. Phenylen, oder eine Alkylenethergruppe mit dem Siliziumatom verbunden ist.

In einer bevorzugten Ausführungsform weist der Rest $R^6$ folgende Formel (IV) auf:

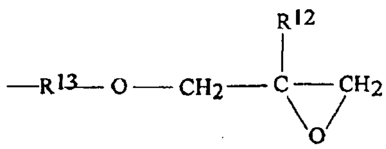

(III)

worin

- $R^{12}$ Wasserstoff oder $C_{1-4}$-Alkyl, bevorzugt Wasserstoff, ist und
- $R^{13}$ eine unsubstituierte oder substituierte $C_{1-10}$-Alkylen-Gruppe, bevorzugter eine unsubstituierte oder substituierte $C_{1-4}$-Alkylen-Gruppe ist.

Wie bereits oben angemerkt, wird unter einer Alkylen-Gruppe eine zweiwertige Alkyl-Gruppe verstanden (also z.B. $-CH_2-$; $-CH_2-CH_2-$; etc.).

Bezüglich der bevorzugten Alkyl-, Cycloalkyl-, Aryl- oder Alkylenarylgruppen für den Rest $R^7$ kann auf die oben für $R^1$, $R^2$, $R^3$ und $R^4$ gemachten Ausführungen verwiesen werden.

Bevorzugte Silanderivate der Formel (II) sind z.B. 3-Glycidoxymethyltrimethoxysilan, 3-Glycidoxypropyltrihydroxysilan, 3-Glycidoxypropyldimethylhydroxysilan, 3-Glycidoxypropyldimethylethoxysilan, 3-Glycidoxypropylmethyldiethoxysilan, 3-Glycidoxypropyltrimethoxysilan, 3-Glycidoxypropyltriethoxysilan, 3-Glycidoxypropyldimethoxymethylsilan, 3-Glycidoxypropyldiethoxymethylsilan, 2-(3,4-epoxycyclohexyl)ethyltrimethoxysilan, und entsprechende Derivate.

Diese Silanderivate der Formel (II) sind dem Fachmann allgemein bekannt und sind kommerziell erhältlich und/oder durch dem Fachmann bekannte Standardverfahren herstellbar.

Bevorzugt liegt/liegen das Silanderivat der Formel (II) und/oder die Hydrolyse- und/oder Kondensationsprodukte des Silanderivats (II) in der Zusammensetzung in einer Menge von 5 Gew% bis 50 Gew%, bevorzugter von 5 Gew% bis 20 Gew% vor.

Das Gewichtsverhältnis des Silanderivats (I) oder dessen Hydrolyse- und/oder Kondensationsprodukte zu dem Silanderivat (II) kann grundsätzlich über einen breiten Bereich variiert werden.

Bevorzugt liegt das Gewichtsverhältnis des Silanderivats (I) und/oder dessen Hydrolyse- und/oder Kondensationsprodukte zu dem Silanderivat (II) und/oder dessen Hydrolyse- und/oder Kondensationsprodukte im Bereich von 95/5 bis 5/95, bevorzugter im Bereich von 70/30 bis 30/70, noch bevorzugter im Bereich von 60/40 bis 40/60.

Wie bereits oben angegeben, enthält die erfindungsgemäße Zusammensetzung als Komponente (c) ein kolloidales anorganisches Oxid, Fluorid oder Oxyfluorid oder ein Gemisch dieser.

Das kolloidale anorganische Oxid, Fluorid oder Oxyfluorid trägt durch Einbau in das bestehende Netzwerk zur

Erhöhung der Kratzfestigkeit bei. Weiterhin kann durch Auswahl geeigneter Oxide, Fluoride oder Oxyfluoride die Brechzahl der Beschichtung der Brechzahl des Substrats angepasst werden.

In einer bevorzugten Ausführungsform wird das anorganische Oxid aus $SiO_2$, $TiO_2$, $ZrO_2$, $SnO_2$, $Sb_2O_3$, $Al_2O_3$, AlO(OH) oder Mischoxiden oder Gemischen oder Core-Shell-Strukturen davon ausgewählt. Als Fluorid kann beispielsweise $MgF_2$ als reine Komponente oder in Core-Shell-Struktur mit einem der oben genannten Oxide eingesetzt werden.

Der mittlere Partikeldurchmesser der anorganischen Komponente sollte bevorzugt so gewählt sein, dass die Transparenz der Beschichtung nicht beeinflusst wird. In einer bevorzugten Ausführungsform weist die kolloidale anorganische Komponente einen mittleren Partikeldurchmesser im Bereich von 2 nm bis 150 nm, noch bevorzugter von 2 nm bis 70 nm auf. Der mittlere Partikeldurchmesser wird über dynamische Lichtstreuung gemessen.

Bevorzugt liegt die kolloidale anorganische Komponente in einer Menge von 5 Gew% bis 50 Gew%, noch bevorzugter von 5 Gew% bis 25 Gew%, bezogen auf das Gesamtgewicht der Zusammensetzung, vor.

Wie oben bereits angegeben, enthält die erfindungsgemäße Zusammensetzung als Komponente (d) eine Epoxidverbindung, die drei Epoxidgruppen aufweist.

Solche Epoxidverbindungen, die drei Epoxidgruppen aufweisen, sind dem Fachmann grundsätzlich bekannt.

Erfindungsgemäß handelt es sich bei der Epoxidverbindung um eine Triglycidyletherverbindung.

Die erfindungsgemäße Triglycidyletherverbindung weist die nachfolgende Formel (V) auf:

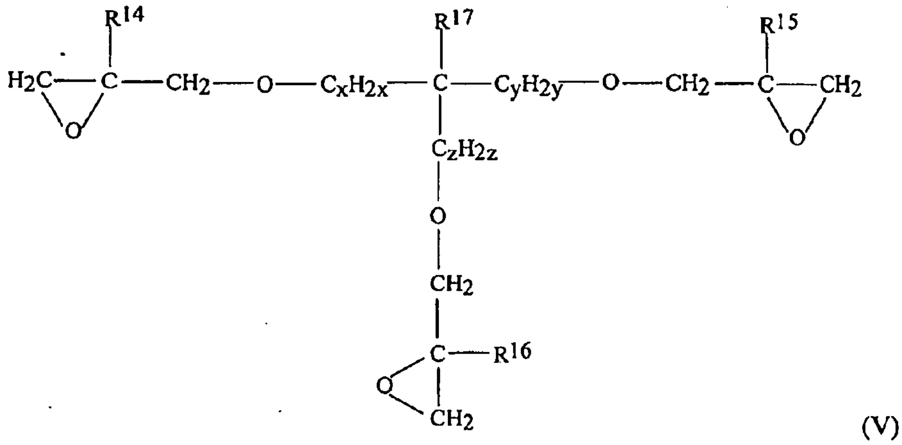

(V)

worin

$R^{14}$, $R^{15}$ und $R^{16}$, die gleich oder unterschiedlich sein können, Wasserstoff oder Methyl sind,

$R^{17}$ Wasserstoff oder $C_{1-4}$-Alkyl ist,

x = 0-3 ist,

y = 0-3 ist,

z = 0-3 ist.

In einer bevorzugten Ausführungsform ist x=1-2, y=1-2 und z=0-1.

Bevorzugt ist $R^{17}$ Wasserstoff, Methyl oder Ethyl.

Bevorzugt sind $R^{14}$, $R^{15}$ und $R^{16}$ Wasserstoff.

In einer bevorzugten Ausführungsform wird die Epoxidverbindung der Formel (V) ausgewählt aus Trimethylolpropantriglycidylether, Triglycidylglycerin, Trimethylolethantriglycidylether, einem Präpolymer davon, oder einem Gemisch davon.

Bevorzugt liegt die drei Epoxidgruppen aufweisende Epoxidverbindung in einer Menge von 0,1 Gew% bis 10 Gew%, bevorzugter von 0,5 Gew% bis 10 Gew%, bezogen auf das Gesamtgewicht der Zusammensetzung, vor.

Wie oben ausgerührt, enthält die erfindungsgemäße Zusammensetzung ein Katalysatorsystem für die thermische Polymerisation von Epoxiden, umfassend

- eine Lewis-Säure und
- ein thermolatentes Lewis-Säure-Base-Addukt.

Wie nachfolgend noch eingehender erörtert wird, ermöglicht diese Kombination einer Lewis-Säure mit einem thermolatenten Lewis-Säure-Base-Addukt eine sehr gleichmäßige Vernetzung und damit auch konstant hohe Festigkeit über die gesamte Schichtdicke hinweg.

Im Rahmen der vorliegenden Erfindung wird der Begriff "Lewis-Säure" in seiner üblichen, dem Fachmann geläufigen Bedeutung verstanden und bezieht sich daher auf eine elektrophile Elektronenpaarakzeptorverbindung. Dementsprechend wird unter einer Lewis- Base eine Elektronenpaardonorverbindung verstanden. Bevorzugt handelt es sich bei den Lewis-Säuren um solche, die bereits bei tieferen Temperaturen eine katalytische Aktivität aufweisen, z.B. bereits bei Raumtemperatur.

Für die thermische Polymerisation von Epoxiden geeignete Lewis-Säuren sind dem Fachmann grundsätzlich bekannt. Beispielhaft können als geeignete Lewis-Säuren für die thermische Polymerisation von Epoxiden Folgende angegeben werden: Ammoniumsalze, Metallsalze (insbesondere von Metallen aus einer der Gruppen 1 (d.h. Alkalimetallsalze), 2 (d.h. Erdalkalimetallsalze) oder 13 (bevorzugt A1 oder B) des Periodensystems der Elemente), Halogenide eines Elements der Gruppe 13 des Periodensystems der Elemente (insbesondere $AlX_3$ oder $BX_3$ wobei X Chlor oder Fluor ist), organische Sulfonsäuren und deren Aminsalze, Alkalimetall- oder Erdalkalimetallsalze wie z.B. Alkalimetall- oder Erdalkalimetallsalze von Carbonsäuren, Fluoridsalze, Organozinnverbindungen, oder ein Gemisch aus zwei oder mehreren der vorstehend angegebenen Lewis-Säuren.

Bevorzugte Metallsalze von Metallen aus einer der Gruppen 1, 2 oder 13 des Periodensystems der Elemente sind z.B. Perchlorate oder Carboxylate (d.h. Carbonsäuresalze).

Bevorzugte Lewis-Säuren sind z. B. Ammoniumperchlorate, Magnesiumperchlorate, Sulfonsäuren und -salze, und Trifluomethansulfonsäuren und -salze.

Als weitere Komponente enthält das Katalysatorsystem der erfindungsgemäßen Zusammensetzung ein thermolatentes bzw. thermolabiles Lewis-Säure-Base-Addukt.

Thermolatente bzw. thermolabile Katalysatorverbindungen sind dem Fachmann grundsätzlich bekannt. Unter einer solchen thermolatenten Katalysatorverbindung wird eine Verbindung verstanden, die erst bei höheren Temperaturen eine katalytische Aktivität (hinsichtlich der betreffenden chemischen Reaktion) aufweist, während sie bei Raumtemperatur im Wesentlich noch katalytisch inaktiv ist. Erst durch die Zuführung ausreichender thermischer Energie wird eine thermolatente Katalysatorverbindung in einen katalytisch aktiven Zustand überführt.

In einer bevorzugten Ausführungsform handelt es sich bei dem thermolatenten Lewis-Säure-Base-Addukt um eine Metallkomplexverbindung.

Bei den Metallkomplexverbindungen kann es sich um solche handeln, die einzähnige oder mehrzähnige Liganden (d.h. Metallchelatkomplexe) aufweisen.

Bevorzugt wird die Metallkomplexverbindung aus einem Metallenolat, insbesondere einem Metallacetylacetonat, einem Metallalkoxid, oder einem Metallacetat, oder einem Gemisch davon ausgewählt.

Bevorzugt wird das Metall der Metallkomplexverbindung aus einer der Gruppen 6 (z.B. Cr), 8 (z.B. Fe), 12 (z.B. Zn) und 13 (insbesondere Al) des Periodensystems der Elemente ausgewählt.

In einer bevorzugten Ausführungsform wird die als thermolatentes Lewis-Säure-Base-Addukt fungierende Metallkomplexverbindung ausgewählt aus Aluminiumacetylacetonat, Eisenacetylacetonat, und Zinkacetylacetonat.

Bevorzugt liegt das Katalysatorsystem in einer Menge im Bereich von 0,01 Gew% bis 5 Gew%, bevorzugter im Bereich von 0,1 Gew% bis 3 Gew%, bezogen auf das Gesamtgewicht der Zusammensetzung, vor.

Das Gewichtsverhältnis von Lewis-Säure zu dem thermolatenten Lewis-Säure-Base-Addukt kann über einen breiten Bereich variiert werden. Bevorzugt liegt das Gewichtsverhältnis von Lewis-Säure zu thermolatentem Lewis-Säure-Base-Addukt im Bereich von 20/1 bis 1/2, bevorzugter von 5/1 bis 2/1.

Bevorzugt umfasst die erfindungsgemäße Zusammensetzung ein Lösungsmittel, das einen Alkohol, Ether und/oder Ester enthält.

Enthält das Lösungsmittel einen Alkohol, wird dieser bevorzugt aus einem Alkanol, Cycloalkanol, Arylalkohol, Alkylenglycol, Monoalkylether von Polyoxyalkylenglycolen oder Monoalkylether von Alkylenglycolen oder deren Gemischen ausgewählt.

In einer bevorzugten Ausführungsform wird der Alkohol aus einem $C_{1-6}$-Alkanol, bevorzugter einem $C_{1-4}$-Alkanol, einem Mono-$C_{1-4}$-Alkylether eines $C_{2-4}$-Alkylenglycols, oder einem Gemisch davon ausgewählt.

Enthält das Lösungsmittel einen Ether, wird dieser bevorzugt aus einem Dialkylether, einem cycloaliphatischen Ether, einem Arylether oder Alkylarylether oder deren Gemischen ausgewählt.

Enthält das Lösungsmittel einen Ester, wird dieser bevorzugt aus einem Alkylester, Cycloalkylester, Arylalkylester, Alkylenglycolester oder deren Gemischen ausgewählt.

Hinsichtlich der Homogenität und optischen Qualität der aus der Zusammensetzung hergestellten Beschichtung kann es vorteilhaft sein, wenn das Lösungsmittel zwei Alkohole, Ether oder Ester mit unterschiedlichem Siedepunkt enthält.

Bevorzugt enthält das Lösungsmittel einen ersten Alkohol, Ether oder Ester mit einem Siedepunkt S1 [in °C] und einen zweiten Alkohol, Ether oder Ester mit einem Siedepunkt S2 [in °C], wobei sich der Siedepunkt S1 und der

Siedepunkt S2 so unterscheiden, dass entweder

$$S1/S2 \geq 1{,}2$$

oder

$$S1/S2 \leq 0{,}8$$

Bevorzugt enthält das Lösungsmittel ein $C_{1-4}$-Alkanol als ersten Alkohol und einen Monoalkylether eines Alkylenglycols, bevorzugter einen Mono-$C_{1-4}$-Alkylether eines $C_{2-4}$-Alkylenglycols als zweiten Alkohol.

Bevorzugt liegt das Gewichtsverhältnis des ersten Alkohols zum zweiten Alkohol im Bereich von 5 bis 0,01, bevorzugter im Bereich von 2 bis 0,2.

Bevorzugt enthält die Zusammensetzung auch Wasser. In einer bevorzugten Ausführungsform liegt das Wasser in einer Menge von 2 bis 15 Gew%, bezogen auf das Gesamtgewicht der Zusammensetzung, vor.

In einer bevorzugten Ausführungsform enthält die Zusammensetzung keinen Katalysator für die Photopolymerisation von Epoxiden.

Als weitere optionale Komponenten der Zusammensetzung können z.B. oberflächenaktive Substanzen (z.B. zur Unterstützung der Filmbildung), UV-Absorber, Farbstoffe und/oder Stabilisatoren genannt werden.

Erfindungsgemäß ist folgende Zusammensetzung ausgeschlossen:
36 Teile Trimethylolpropantriglycidylether, 162 Teile 2-Propanol, 264 Teile 1-Methoxy-2-propanol, 186 Teile 3-Glycidoxypropyltrimethoxysilan, 150 Teile Tetraethoxysilan, 240 Teile eines $SiO_2$-Nano-Sols, 126 Teile Wasser, 7,2 Teile Aluminiumacetylacetonat, 25,2 Teile 1M Ammoniumperchlorat-Lösung, und 3,6 Teile eines Fließmittels, insbesondere eines Fluortensid-Fließmittels (die Anteile der jeweiligen Komponenten sind Gewichtsteile).

Gemäß eines weiteren Aspekts der vorliegenden Erfindung wird ein Verfahren zur Beschichtung eines Substrats bereitgestellt, umfassend

- die Bereitstellung der oben beschriebenen erfindungsgemäßen Zusammensetzung,
- das Aufbringen der Zusammensetzung auf dem Substrat, und
- die Behandlung des Substrats bei einer Temperatur im Bereich von 75 °C bis 150°C zur Aushärtung der Beschichtung.

Hinsichtlich der bevorzugten Eigenschaften der Zusammensetzung kann auf die oben gemachten Ausführungen verwiesen werden.

Für das Beschichtungsverfahren kann es vorteilhaft sein, wenn die Silane der Formel (I) und/oder (II) zum Zeitpunkt des Aufbringens auf das Substrat bereits eine gewisse Vernetzung aufweisen. Eine definierte Vorkondensation kann z.B. durch eine mit Wasser oder einer wässrigen organischen oder Mineralsäure katalysierten Hydrolyse der Silane der Formel (I) und/oder (II) erreicht werden.

Das Aufbringen der Zusammensetzung auf dem Substrat kann mit üblichen, dem Fachmann bekannten Verfahren erfolgen.

Beispielhaft kann an dieser Stelle Tauchbeschichtung ("Dip Coating"), Schleuderbeschichtung ("Spin Coating"), Sprühbeschichtung, Fluten und Schlitzdüsenauftrag genannt werden.

Mit der Tauchbeschichtung kann die erfindungsgemäße Zusammensetzung auch auf Oberflächen von Substraten mit komplexerer Geometrie aufgebracht werden.

Im Rahmen der vorliegenden Erfindung können eine Vielzahl unterschiedlicher Substrate verwendet werden. Es können z.B. Kunststoffsubstrate oder auch Glassubstrate mit der erfindungsgemäßen Zusammensetzung beschichtet werden.

Ein geeignetes Kunststoffsubstrat kann z.B. einen oder mehrere der folgenden Kunststoffe aufweisen: Polycarbonat, Poly(methyl)methacrylat, Polyurethane, Polyamide, Polydiethylenglykol-bis-allyl carbonat (CR39), Polythiourethane wie z.B. MR-6, MR-7, MR-8, MR-10, MR-174.

Bei dem zu beschichtenden Substrat handelt es sich bevorzugt um solche, die in optischen Anwendungen eingesetzt werden.

Bevorzugt handelt es sich bei dem Substrat um eine Linse für die Anwendung als Kunststoffbrillenglas oder Lupe.

Bevorzugt erfolgt die thermische Behandlung des Substrats bei einer Temperatur im Bereich von 75 °C bis 150 °C, noch bevorzugter im Bereich von 90°C bis 130 °C.

Gemäß eines weiteren Aspekts der vorliegenden Erfindung wird ein Artikel bereit gestellt, umfassend

- ein Substrat, und
- eine Beschichtung auf der Substratoberfläche, wobei die Beschichtung durch das oben beschriebene Verfahren erhältlich ist bzw. erhalten wird.

Bezüglich der Eigenschaften des Substrats und der Zusammensetzung, die auf das Substrat aufgebracht und anschließend unter Erhalt der Beschichtung vernetzt wird, kann auf die bereits oben gemachten Ausführungen verwiesen werden.

Gemäß eines weiteren Aspekts betrifft die vorliegende Erfindung die Verwendung der oben beschriebenen erfindungsgemäßen Zusammensetzung zur Beschichtung eines Substrats.

Hinsichtlich geeigneter und bevorzugter Substrate kann auf die bereits oben gemachten Ausführungen verwiesen werden.

**Beispiele**

**Chemikalien**

Tetraethoxysilan und 3-Glycidoxypropyltrimethoxysilan: Aldrich
IPA-ST: $SiO_2$-Nano-Sol von Nissan Chemicals, Houston
FC4430: Flow-Agent der Firma 3M
Andere Chemikalien und Lösungsmittel, wenn nicht spezifiziert, Aldrich

**Test der Schicht**

Der Bayer-Test zur Bewertung der Kratzfestigkeit wurde mit einem COLTS Bayer-Testgerät und dem entsprechenden Verfahren gemessen. Bayer-Ratio von 1 bedeutet, dass die Schicht die gleiche Kratzfestigkeit wie genormtes CR39 Glas hat. Je höher die Bayer-Ratio ist, desto höher ist auch die Kratzfestigkeit.

Die Schichthaftung wurde über einen Gitterschnitt-Test durchgeführt. Die Ergebnisse werden in 0 bis 5 eingestuft, wobei Stufe 0 die beste Haftfestigkeit (ohne Delamination) ist und Stufe 5 die schlechteste (komplette Ablösung) ist.

Test der Laugenbeständigkeit: Beschichtete Gläser (-2,0 Dioptrien) wurden in einer alkalischen Lösung (pH>14) bei 50°C mit Ultraschall für 180 Sekunden behandelt. Schichtdicken vor und nach der Behandlung wurden an derselben Stelle optisch gemessen. Die Dicke der Hartschichten waren typischerweise 2,5μm. Die Laugenbeständigkeit wird anschließend anhand des Schichtabbaus gemessen, wobei die Laugenbeständigkeit umso besser ist, je geringer der Schichtabbau ist.

Zudem wurden die Beschichtungen mit einem sog. Nano-Indenter charakterisiert. Bei solchen Nano-Indentationsmessungen wird eine Diamant-Spitze mit ansteigender Kraft auf die Oberfläche gedrückt. Die Auflösung der z-Position liegt hier im Nanometerbereich. Vereinfacht gesagt wird der Grenzwert für den ersten Einbruch in der benötigten Eindringkraft als Indentationshärte angegeben.

**Hergestellte und getestete Zusammensetzungen**

(In den nachfolgenden Beispielen sind die Anteile der jeweiligen Komponenten Gewichtsteile.)

Beispiel 1 (nicht erfindungsgemäß): Basisformulierung ohne funktionales Additiv 163 Teile 3-Glycidoxypropyltrimethoxysilan, 150 Teile Tetraethoxysilan, und 200 Teile IPA-ST wurden in 134 Teile 2-Propanol, 221 Teile 1-Methoxy-2-propanol, und 105 Teile Wasser gemischt und bei Raumtemperatur 24 Stunden gerührt. Danach wurden 3,3 Teile Aluminiumacetylacetonat, 20,9 Teile Ammoniumperchlorate 1M Lösung, und 3 Teile FC4430 addiert und die Mischung für weitere 3 Stunden gerührt. Die resultierte Lösung wurde durch eine 5μm Filter filtriert und vor der Beschichtung im Kühlschrank gelagert.

Beispiel 2 (erfindungsgemäß) 30 Teile Trimethylolpropantriglycidylether wurde in 134 Teile 2-Propanol und 221 Teile 1-Methoxy-2-propanol gelöst. Zu der Lösung wurden 163 Teile 3-Glycidoxypropyltrimethoxysilan, 150 Teile Tetraethoxysilan, 200 Teile IPA-ST, und 105 Teile Wasser zugegeben und bei Raumtemperatur für 24 Stunden gerührt. Danach wurden 3,3 Teile Aluminiumacetylacetonat, 20,9 Teile Ammoniumperchlorate 1M Lösung, und 3 Teile FC4430 addiert und die Mischung für weitere 3 Stunden gerührt. Die resultierte Lösung wurde durch eine 5μm Filter filtriert und vor der Beschichtung im Kühlschrank gelagert.

Beispiel 3 (nicht erfindungsgemäß)

30 Teile 1,4-Butandioldiglycidylether wurde in 134 Teile 2-Propanol und 221 Teile 1-Methoxy-2-propanol gelöst.

Zu der Lösung wurden 163 Teile 3-Glycidoxypropyltrimethoxysilan, 150 Teile Tetraethoxysilan, 200 Teile IPA-ST und 105 Teile Wasser zugegeben und bei Raumtemperatur für 24 Stunden gerührt. Danach wurden 3,3 Teile Aluminiumacetylacetonat, 20,9 Teile Ammoniumperchlorat 1M Lösung, und 3 Teile FC4430 hinzugefügt und die Mischung für weitere 3 Stunden gerührt. Die resultierte Lösung wurde durch eine 5μm Filter filtriert und vor der Beschichtung vor der Beschichtung im Kühlschrank gelagert.

Die Testsubstrate wurden vor der Tauchbeschichtung mit einem wässrigalkalischen Waschprozess aktiviert und nach der Beschichtung in einem Ofen bei 100°C 4 Stunden ausgehärtet.

Die mit diesen Zusammensetzungen erhaltenen Beschichtungen wurden hinsichtlich ihrer Haftfestigkeit (Gitterschnitt-Test) auf unterschiedlichen Substraten, Laugenbeständigkeit (ermittelt über das Ausmaß des Schichtabbaus), und ihrer Kratzfestigkeit (Bayer-Test) untersucht. Die erhaltenen Ergebnisse werden in der Tabelle 1 gezeigt.

**Tabelle 1:** Schichttestergebnisse

| Lack | Epoxidverbindung der Formel (III) | Haftfestigkeit* | Schichtabbau [μm] | Bayer-Wert |
|---|---|---|---|---|
| Bsp. 1 | Ohne Additiv | CR39: 0,5; 0,5<br>MR7: 4, 4<br>MR8: 4, 4 | Komplette Schichtabbau | 6,2 |
| Bsp. 2 | Trimethylolpropantriglycidylether | CR 39: 0,5; 0,5<br>MR7: 0, 0<br>MR8: 0, 0 | 0,6μm | 4,7 |
| Bsp. 3 | 1,4-Butandioldiglycidylether | CR 39: 0,5; 0,5<br>MR7: 0,5; 0,5<br>MR8: 0,5; 0,5 | 0,6μm | 7,5 |
| Ergebnisse der Haftfestigkeit: Substrate, auf erhabener Seite, und Hohlseite | | | | |

Die Ergebnisse zeigen, dass mit der erfindungsgemäßen Zusammensetzung eine Beschichtung mit sehr guter Haftfestigkeit auf unterschiedlichen Substraten und einer hohen Kratzfestigkeit bei noch ausreichend hoher Laugenbeständigkeit erhalten wird.

Weiterhin wurde die Indentationshärte der mit der Zusammensetzung aus Beispiel 2 hergestellten Beschichtung bestimmt und mit Indentationshärten von Beschichtungen, die aus kommerziellen Zusammensetzungen hergestellt wurden, verglichen (Vergleichsproben 1 bis 4). Wie die erfindungsgemäße Zusammensetzung basieren diese kommerziellen Lacke in der Regel auf Sol-Gel Chemie.

Der Verlauf der Indentationshärten als Funktion der Indentationstiefe ist in Figur 1 wiedergegeben.

Figur 1 ist Folgendes zu entnehmen:

- Zum einen liegt die Indentationhärte der erfindungsgemäßen Beschichtung deutlich (ca. 300 MPa) über den Härten der Vergleichsproben.
- Zum anderen fällt auf, dass die erfindungsgemäße Beschichtung erst bei deutlich größeren Indentationstiefen durchbricht (Bsp. 2 bei ca. 600nm im Vergleich zu ca. 250nm bei Vergleichsprobe 2).
- D.h. die erfindungsgemäße Beschichtung hat nicht nur eine große Oberflächenhärte, sondern auch noch in Eindringtiefen bis zu 600nm eine hohe Härte.

## Patentansprüche

**1.** Eine Zusammensetzung für die Herstellung einer Beschichtung, umfassend

(a) ein Silanderivat der Formel (I)

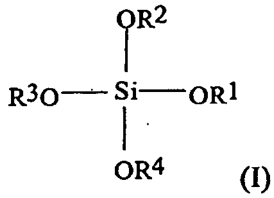

(I)

worin

$R^1$, $R^2$, $R^3$ und $R^4$, die gleich oder unterschiedlich sein können, ausgewählt werden aus Alkyl, Acyl, Alkylenacyl, Cycloalkyl, Aryl oder Alkylenaryl, die gegebenenfalls substituiert sein können, und/oder ein Hydrolyse- und/oder Kondensationsprodukt des Silanderivats der Formel (I);

(b) ein Silanderivat der Formel (II)

$$R^6R^7_{3-n}Si(OR^5)_n \qquad (II)$$

worin

$R^5$ eine unsubstituierte oder substituierte Alkyl-, Acyl-, Alkylenacyl-, Cycloalkyl-, Aryl- oder Alkylenarylgruppe ist,
$R^6$ ein organischer Rest ist, der eine Epoxidgruppe enthält,
$R^7$ eine unsubstituierte oder substituierte Alkyl-, Cycloalkyl-, Aryl- oder Alkylenarylgruppe ist,
n 2 oder 3 ist,

und/oder ein Hydrolyse- und/oder Kondensationsprodukt des Silanderivats der Formel (II);

(c) ein kolloidales anorganisches Oxid, Fluorid oder Oxyfluorid;

(d) eine Epoxidverbindung;

(e) ein Katalysatorsystem, umfassend

- eine Lewis-Säure und
- ein thermolatentes Lewis-Säure-Base-Addukt;

wobei die Epoxidverbindung eine Triglycidyletherverbindung ist;
wobei die Triglycidyletherverbindung die nachfolgende Formel (V) aufweist:

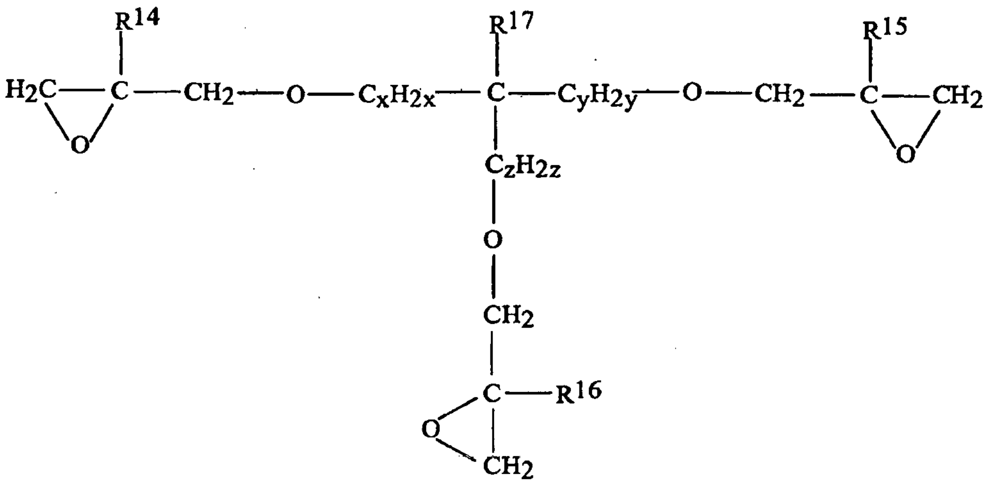

(V)

worin

$R^{14}$, $R^{15}$ und $R^{16}$, die gleich oder unterschiedlich sein können, Wasserstoff oder Methyl sind,
$R^{17}$ Wasserstoff oder $C_{1-4}$-Alkyl ist,
x = 0-3 ist,
y = 0-3 ist,

z = 0-3 ist; und

wobei folgende Zusammensetzung ausgeschlossen ist:
36 Teile Trimethylolpropantriglycidylether, 162 Teile 2-Propanol, 264 Teile 1-Methoxy-2-propanol, 186 Teile 3-Glycidoxypropyltrimethoxysilan, 150 Teile Tetraethoxysilan, 240 Teile eines $SiO_2$-Nano-Sols, 126 Teile Wasser, 7,2 Teile Aluminiumacetylacetonat, 25,2 Teile 1M Ammoniumperchlorat-Lösung, und 3,6 Teile eines Fließmittels, wobei die Anteile der jeweiligen Komponenten Gewichtsteile sind.

2. Die Zusammensetzung nach Anspruch 1, wobei der Rest $R^6$ in dem Silanderivat der Formel (II) die folgende Formel (III) aufweist:

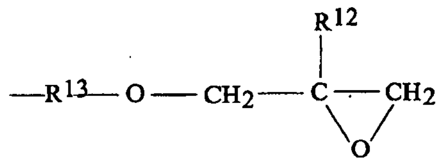

(III)

worin

$R^{12}$ Wasserstoff oder $C_{1-4}$-Alkyl ist und
$R^{13}$ $C_{1-10}$-Alkylen ist.

3. Die Zusammensetzung nach einem der vorstehenden Ansprüche, wobei das anorganische Oxid aus $SiO_2$, $TiO_2$, $ZrO_2$, $SnO_2$, $Sb_2O_3$, $Al_2O_3$, AlO(OH) oder Mischoxiden oder Gemischen oder Core-Shell-Strukturen davon ausgewählt wird, und/oder das anorganische Fluorid $MgF_2$ ist, das optional in Core-Shell-Struktur mit dem anorganischen Oxid vorliegt.

4. Die Zusammensetzung nach einem der vorstehenden Ansprüche, wobei die Epoxidverbindung der Formel (V) ausgewählt wird aus Trimethylolpropantriglycidylether, Triglycidylglycerin, Trimethylolethantriglycidylether, einem Präpolymer davon, oder einem Gemisch davon.

5. Die Zusammensetzung nach einem der vorstehenden Ansprüche, wobei die Lewis-Säure ausgewählt wird aus einem Ammoniumsalz, einem Metallsalz eines Metalls aus einer der Gruppen 1, 2 oder 13 des Periodensystems der Elemente, einem Halogenid eines Elements der Gruppe 13 des Periodensystems der Elemente, einer organischen Sulfonsäure oder einem Aminsalz davon, einem Fluoridsalz, einer Organozinnverbindungen, oder einem Gemisch davon.

6. Die Zusammensetzung nach einem der vorstehenden Ansprüche, wobei das thermolatente Lewis-Säure-Base-Addukt eine Metallkomplexverbindung ist.

7. Die Zusammensetzung nach Anspruch 6, wobei das Metall der Metallkomplexverbindung aus einer der Gruppen 6, 8, 12 oder 13 des Periodensystems der Elemente ausgewählt wird.

8. Die Zusammensetzung nach Anspruch 6 oder 7, wobei die Metallkomplexverbindung aus einem Metallenolat, insbesondere einem Metallacetylacetonat, einem Metallalkoxid, oder einem Metallacetat, oder einem Gemisch davon ausgewählt wird.

9. Die Zusammensetzung nach einem der vorstehenden Ansprüche, wobei die Zusammensetzung ein Lösungsmittel umfasst, das einen Alkohol, Ether und/oder Ester enthält.

10. Ein Verfahren zur Beschichtung eines Substrats, umfassend

- die Bereitstellung der Zusammensetzung gemäß einem der Ansprüche 1-9,
- das Aufbringen der Zusammensetzung auf dem Substrat, und
- die Behandlung des Substrats bei einer Temperatur im Bereich von 75°C bis 150°C zur Aushärtung der Beschichtung.

**11.** Ein Artikel, umfassend

- ein Substrat, und
- eine Beschichtung auf der Substratoberfläche, wobei die Beschichtung durch das Verfahren gemäß Anspruch 10 erhältlich ist bzw. erhalten wird.

## Claims

**1.** Composition for the production of a coating, comprising

(a) a silane derivative of the formula (I)

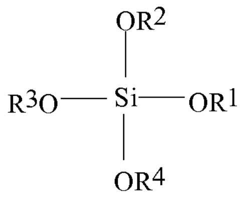

(I)

in which
$R^1$, $R^2$, $R^3$ and $R^4$, which may be the same or different, are selected from alkyl, acyl, alkyleneacyl, cycloalkyl, aryl or alkylenearyl, which may optionally be substituted,
and/or a hydrolysis and/or condensation product of the silane derivative of the formula (I),
(b) a silane derivative of the formula (II)

$$R^6R^7_{3-n}Si(OR^5)_n \qquad (II)$$

in which

$R^5$ is an unsubstituted or substituted alkyl, acyl, alkyleneacyl, cycloalkyl, aryl or alkylenearyl group,
$R^6$ is an organic radical containing an epoxide group,
$R^7$ is an unsubstituted or substituted alkyl, cycloalkyl, aryl or alkylenearyl group,
n is 2 or 3,

and/or a hydrolysis and/or condensation product of the silane derivative of the formula (II),
(c) a colloidal inorganic oxide, fluoride or oxyfluoride,
(d) an epoxide compound,
(e) a catalyst system comprising

- a Lewis acid and
- a thermolatent Lewis acid-base adduct,

wherein the epoxide compound is a triglycidyl ether compound,
wherein the triglycidyl ether compound has the following formula (V):

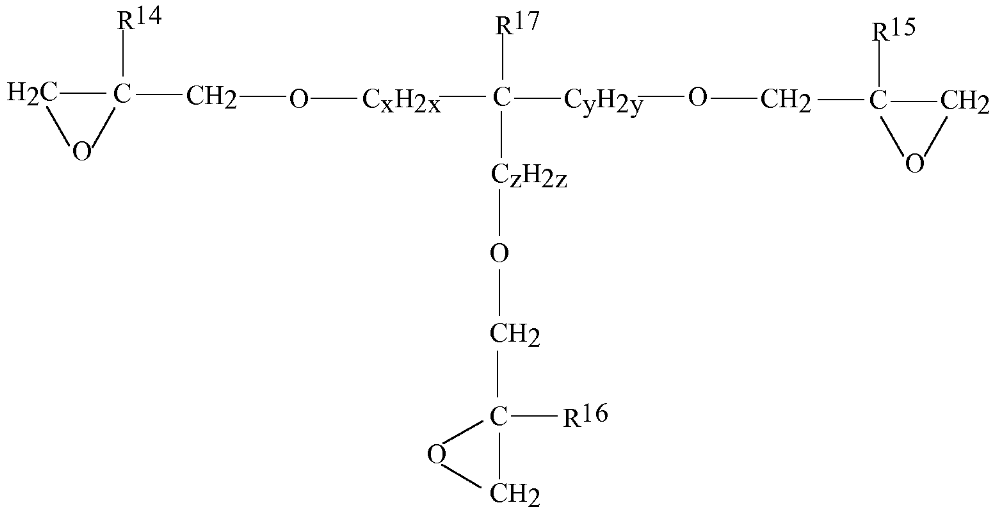

(V)

in which

$R^{14}$, $R^{15}$ and $R^{16}$, which may be the same or different, are hydrogen or methyl,
$R^{17}$ is hydrogen or $C_{1-4}$-alkyl,
x = 0-3,
y = 0-3,
z = 0-3,

and wherein the following composition is excluded:
36 parts trimethylolpropane triglycidyl ether, 162 parts 2-propanol, 264 parts 1-methoxy-2-propanol, 186 parts 3-glycidoxypropyltrimethoxysilane, 150 parts tetraethoxysilane, 240 parts of an $SiO_2$ nanosol, 126 parts water, 7.2 parts aluminium acetylacetonate, 25.2 parts 1M ammonium perchlorate solution and 3.6 parts of a flow agent, where the proportions of the respective components are parts by weight.

2. Composition according to Claim 1, wherein the $R^6$ radical in the silane derivative of the formula (II) has the following formula (III):

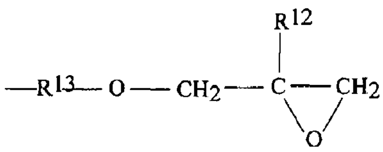

(III)

in which

$R^{12}$ is hydrogen or $C_{1-4}$-alkyl and
$R^{13}$ is $C_{1-10}$-alkylene.

3. Composition according to either of the preceding claims, wherein the inorganic oxide is selected from $SiO_2$, $TiO_2$, $ZrO_2$, $SnO_2$, $Sb_2O_3$, $Al_2O_3$, AlO(OH) or mixed oxides or mixtures or core-shell structures thereof, and/or is the inorganic fluoride $MgF_2$ which is optionally present in a core-shell structure with the inorganic oxide.

4. Composition according to any of the preceding claims, wherein the epoxide compound of the formula (V) is selected from trimethylolpropane triglycidyl ether, triglycidylglycerol, trimethylolethane triglycidyl ether, a prepolymer thereof, or a mixture thereof.

5. Composition according to any of the preceding claims, wherein the Lewis acid is selected from an ammonium salt, a metal salt of a metal from one of groups 1, 2 and 13 of the periodic table of the elements, a halide of an element of group 13 of the periodic table of the elements, an organic sulphonic acid or an amine salt thereof, a fluoride salt,

an organotin compound or a mixture thereof.

6. Composition according to any of the preceding claims, wherein the thermolatent Lewis acid-base adduct is a metal complex.

7. Composition according to Claim 6, wherein the metal of the metal complex is selected from one of groups 6, 8, 12 or 13 of the periodic table of the elements.

8. Composition according to Claim 6 or 7, wherein the metal complex is selected from a metal enolate, especially a metal acetylacetonate, a metal alkoxide, or a metal acetate, or a mixture thereof.

9. Composition according to any of the preceding claims, wherein the composition comprises a solvent comprising an alcohol, ether and/or ester.

10. Process for coating a substrate, comprising

- the provision of the composition according to any of Claims 1-9,
- the application of the composition to the substrate, and
- the treatment of the substrate at a temperature in the range from 75°C to 150°C to cure the coating.

11. Article comprising

- a substrate and
- a coating on the substrate surface, the coating being obtainable or obtained by the process according to Claim 10.

**Revendications**

1. Composition pour la préparation d’un revêtement, comprenant

(a) un dérivé de silane de formule (I)

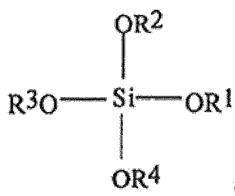

(I)

dans laquelle
$R^1$, $R^2$, $R^3$ et $R^4$, qui peuvent être identiques ou différents, sont choisis parmi alkyle, acyle, alkylène-acyle, cycloalkyle, aryle ou alkylène-aryle, qui peuvent le cas échéant être substitués, et/ou un produit d’hydrolyse et/ou de condensation du dérivé de silane de formule (I) ;
(b) un dérivé de silane de formule (II)

$$R^6R^7_{3-n}Si(OR^5)_n \qquad (II)$$

dans laquelle

$R^5$ représente un groupe alkyle, acyle, alkylène-acyle, cycloalkyle, aryle ou alkylène-aryle, non substitué ou substitué,
$R^6$ représente un radical organique qui contient un groupe époxyde,
$R^7$ représente un groupe alkyle, cycloalkyle, aryle ou alkylène-aryle, non substitué ou substitué,
n vaut 2 ou 3,
et/ou un produit d’hydrolyse et/ou de condensation du dérivé de silane de formule (II) ;

(c) un oxyde, un fluorure ou un oxyfluorure colloïdal, inorganique ;
(d) un composé époxyde ;
(e) un système catalytique, comprenant

- un acide de Lewis et
- un produit d'addition d'acide-base de Lewis thermolatent ;

le composé époxyde étant un composé triglycidyléther ;
le composé triglycidyléther présentant la formule (V) suivante :

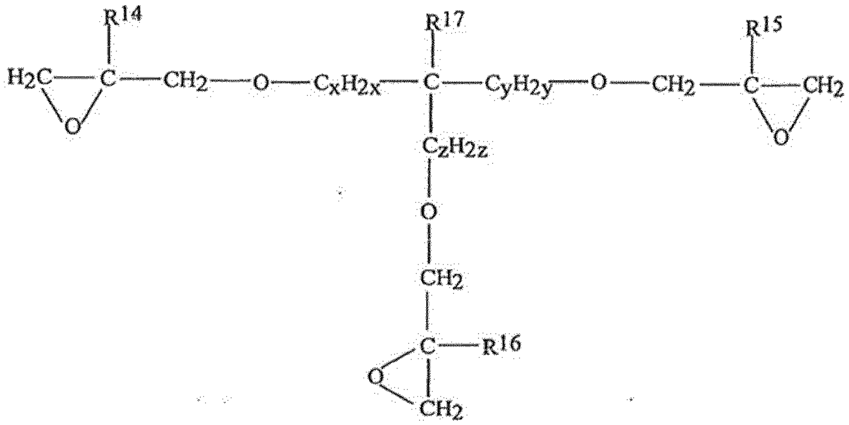

(V)

dans laquelle

$R^{14}$, $R^{15}$ et $R^{16}$, qui peuvent être identiques ou différents, représentent hydrogène ou méthyle,
$R^{17}$ représente hydrogène ou $C_{1-4}$-alkyle,
x = 0-3,
y = 0-3,
z = 0-3 ; et

la composition suivante étant exclue :
36 parties de triméthylolpropanetriglycidyléther, 162 parties de 2-propanol, 264 parties de 1-méthoxy-2-propanol, 186 parties de 3-glycidoxypropyltriméthoxysilane, 150 parties de tétraéthoxysilane, 240 parties d'un nanosol de $SiO_2$, 126 parties d'eau, 7,2 parties d'acétylacétonate d'aluminium, 25,2 parties de solution de perchlorate d'ammonium à 1 M et 3,6 parties d'un fluidifiant, les proportions des différents composants étant des parties en poids.

**2.** Composition selon la revendication 1, le radical $R^6$ dans le dérivé de silane de formule (II) présentant la formule suivante (III) :

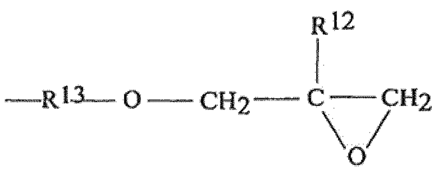

(III)

dans laquelle

$R^{12}$ représente hydrogène ou $C_{1-4}$-alkyle et
$R^{13}$ représente $C_{1-10}$-alkylène.

**3.** Composition selon l'une quelconque des revendications précédentes, l'oxyde inorganique étant choisi parmi $SiO_2$,

$TiO_2$, $ZrO_2$, $SnO_2$, $Sb_2O_3$, $Al_2O_3$, AlO(OH) ou leurs oxydes mixtes ou leurs mélanges ou leurs structures à noyau-coquille et/ou le fluorure inorganique étant $MgF_2$ qui se trouve éventuellement sous forme d'une structure à noyau-coquille avec l'oxyde inorganique.

**4.** Composition selon l'une quelconque des revendications précédentes, le composé époxyde de formule (V) étant choisi parmi le triméthylolpropanetriglycidyléther, le triglycidylglycérol, le triméthyloléthanetriglycidyléther, un prépolymère correspondant ou un mélange de ceux-ci.

**5.** Composition selon l'une quelconque des revendications précédentes, l'acide de Lewis étant choisi parmi un sel d'ammonium, un sel métallique d'un métal d'un des groupes 1, 2 ou 13 du système périodique des éléments, un halogénure d'un élément du groupe 13 du système périodique des éléments, un acide sulfonique organique ou un sel d'amine correspondant, un sel de fluorure, un composé organostannique ou un mélange de ceux-ci.

**6.** Composition selon l'une quelconque des revendications précédentes, le produit d'addition d'acide-base de Lewis thermolatent étant un composé complexe métallique.

**7.** Composition selon la revendication 6, le métal du composé complexe métallique étant choisi parmi un des groupes 6, 8, 12 ou 13 du système périodique des éléments.

**8.** Composition selon la revendication 6 ou 7, le composé complexe métallique étant choisi parmi un énolate métallique, en particulier un acétylacétonate métallique, un alcoxyde métallique ou un acétate métallique ou un mélange de ceux-ci.

**9.** Composition selon l'une quelconque des revendications précédentes, la composition comprenant un solvant qui contient un alcool, un éther et/ou un ester.

**10.** Procédé pour le revêtement d'un substrat, comprenant

- la préparation de la composition selon l'une quelconque des revendications 1-9,
- l'application de la composition sur le substrat et
- le traitement du substrat à une température dans la plage de 75°C à 150°C pour le durcissement du revêtement.

**11.** Objet, comprenant

- un substrat et
- un revêtement sur la surface du substrat, le revêtement pouvant être obtenu ou étant obtenu par le procédé selon la revendication 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3986997 A
- US 20010049023 A1
- US 4355135 A
- US 5322888 A
- WO 2008087741 A
- EP 2385086 A1
- DE 19857317 A1
- DE 69531661 T2